# EUROPEAN PATENT APPLICATION

(11) **EP 2 663 053 A2**
(43) Date of publication of application: **13.11.2013**
(21) Application number: 13167185.1
(22) Date of filing: 09.05.2013
(51) Int. Cl.: H04L 29/06, G06F 21/62

(54) **Methods and apparatus for creating and implementing security policies for resources on a network**

(30) Priority: 09.05.2012 US 201261644806 P
(71) Applicant: Computer Security Products, Inc., Mississauga, ON L5R 3L7 (CA)
(72) Inventor: Barclay, Callum, Wailuku, HI 96793-2450 (US); O'Neill, Vernette, Wailuku, HI 96793-2450 (US)
(74) Representative: Johnson, Richard Alan

(57) **Abstract**

Methods and apparatus for creating an access permission relationship for resources may include receiving and presenting a matrix comprising roles for users of a system and resources on the system. The methods and apparatus may also include presenting access permissions at an intersection of a role and a resource on the matrix and receiving an assignment of one or more access permissions for the role and the resources. The methods and apparatus may include creating a security policy for the resources based on the assigned access permissions.

## Description

### RELATED APPLICATIONS

This application claims priority to U.S. Provisional Application No. 61/644,806 entitled "Methods and Apparatuses for Creating and Implementing Security Policies for Resources on a Network," filed May 9, 2012. The preceding application is incorporated by reference in its entirety herein.

### BACKGROUND

Aspects of the present invention relate to methods and systems for creating and implementing security policies for accessing resources on a network.

Generally, when using resources on a system, such as files on a UNIX operating system, each resource (e.g., a file or a directory) may have an access control list that indicates what level of access a user may have when accessing a particular resource. The access control list may have multiple entries that may grant a user and/or a group of users a particular access (e.g., read, write, execute, or own) to a resource. For example, the access control list for a particular resource may have one entry granting user number 1 and user number 21 read and write access permissions to the particular resource. The access control list may also have a second entry granting user number 3 and user number 270 read, write and execute access permissions to the particular resource. In addition, the system may include a large network of servers where each server has a number of resources running on each server. As the number of resources increases in a system, the number of access control lists for the resources may also increase. In addition, as the number of users of a system increases, the access control lists for each resource may also increase.

Therefore, on a system running a large number of resources, it may become difficult to manage the access control list for the various resources on the system. For example, it may become difficult to match which users are able to access each resource. In addition, it may become difficult to modify and/or update the access control list for the resources on the system. Moreover, it may become difficult to view which access control lists are currently running for each resource.

Thus, it would be desirable to provide a mechanism that visually presents security options for the resources on a system so that a user may easily view which access control lists are in place and/or create access control lists for resources on a system. In addition, it would be desirable to provide a mechanism that simplifies implementing access control lists for resources on a network of servers.

### SUMMARY

Aspects of the present invention include methods and associated apparatus that, among other features, create and implement security policies for accessing resources on a network. In addition, the methods and associated apparatus may verify, in real time or near real time, that a newly created security policy for resources on the network does not create an error and/or conflict with an existing security policy before implementing the newly created security policy on files and directories currently running on the network (e.g., live files and/or directories).

Additional advantages and novel features relating to aspects of the present invention will be set forth in part in the description that follows, and in part will become more apparent to those skilled in the art upon examination of the following or upon learning by practice thereof.

### DESCRIPTION OF THE FIGURES

In the drawings:

Fig. 1 illustrates an example system in accordance with an aspect of the present invention;

Fig. 2 illustrates an example method flow for creating an access matrix in accordance with an aspect of the present invention;

Fig. 3 illustrates an example method flow for creating an access permission relationship for resources on the system in accordance with an aspect of the present invention;

Fig. 4 illustrates an example interface for use with aspects of the present invention;

Fig. 5 illustrates an example method flow for forecasting effective access to resources in accordance with an aspect of the present invention;

Figs. 6-10 illustrate example graphical user interface screens for use with aspects of the present invention;

Fig. 11 illustrates an example system in accordance with an aspect of the present invention;

Fig. 12 illustrates various features of an example computer system for use in conjunction with aspects of the present invention; and

Fig. 13 illustrates an example system diagram of various hardware components and other features for use in accordance with aspects of the present invention.

### DETAILED DESCRIPTION

Aspects of the present invention relate to methods and associated apparatus that, among other features, create and implement security policies for accessing resources on a system. In an aspect, the system may include a network of servers containing a mix of UNIX based operating systems.

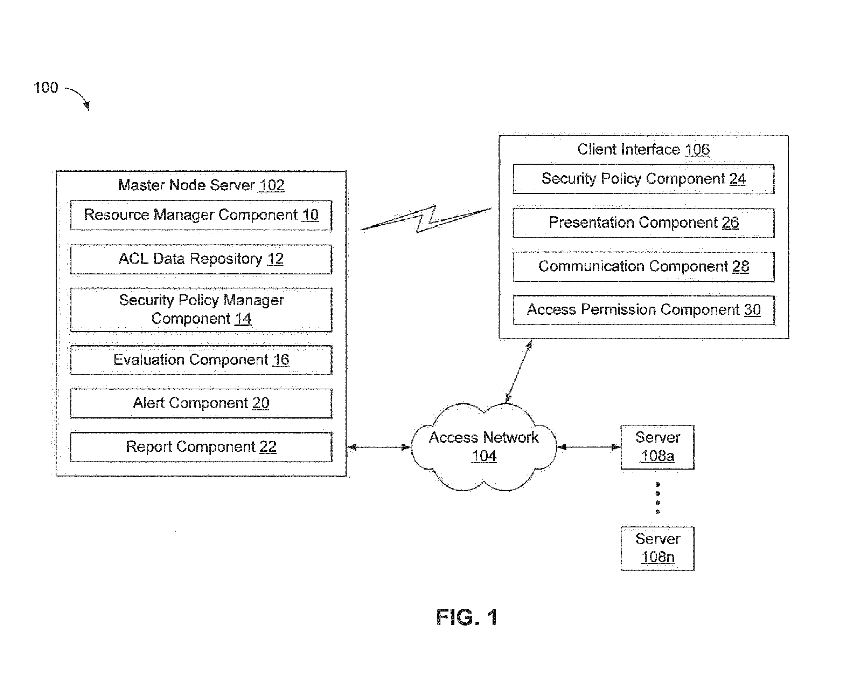

Referring now to Fig. 1, illustrated therein is a system 100 in accordance with an aspect of the present invention. System 100 includes a master node server 102 that stores information that client interface 106 has gathered from a network of servers 108a-108n on system 100. For example, master node server 102 may have a resource manager component 10 operable to store the various resources, gathered by client interface 106 from a network of servers 108a-108n, on the system, such as files and/or directories on the network of servers 108a-108n that are capable of being accessed by users of the system. In addition, master node server 102 may have various access control lists (ACLs) for the resources on the system that determine what access permissions (e.g., read, write, execute, etc.) each user of the system may have to the resources. For example, in a UNIX operating system, ACLs may be placed at both a directory level and at the file level, and therefore, may control access to resources at both the directory and the file level. It should be noted that access permissions can be inherited from the directory structure above a file. Master node server 102 may have an ACL data repository 12 operable to store the ACLs and when a user requests access to a particular resource on the system, resource manager component 10 may verify that the user has permission to access the particular resource by using the ACLs.

In addition, system 100 may include a client interface 106 in communication with master node server 102. Client interface 106 may be implemented on any computing device or portable computing device, such as a cellular device, that may connect to an access network 104. For example, client interface 106 may be implemented on a personal computing device, a cellular telephone, a navigation system, a camera, a personal digital assistant (PDA), and a handheld device having wireless connection capability, among other devices. Client interface 106 may have a security policy component 24 operable to allow a user of the system to create security polices for resources on the system. For example, security policy component 24 may allow a user, such as a system administrator, to create security policies for files and directories from many mixed, cross-platform UNIX operating systems running on the network of servers in the system. In an aspect, client interface 106 may include a presentation component 26 operable to present to a user the various resources and roles on the system and the associated access permissions. In addition, client interface 106 may include an access permission component 30 operable to receive access permissions for the created security policies.

Client interface 106 may have a communication component 28 operable to communicate with master server node 102 and transmit the created security policies to master server node 102. Master server node 102 may include a security policy manager component 14 operable to receive and store the created security policies from client interface 106. Security policy manager component 14 may interface with an evaluation component 16 operable to evaluate the created security policies for the resources on the system for potential errors and/or conflicts with existing security policies before applying the created security policies to files and directories currently running on the system (e.g., live files and/or directories). By evaluating the created security policies for potential errors and/or conflicts, the system may resolve any errors and/or conflicts prior to implementing the security policies. Master server node 102 may also include an alert component 20 operable to generate and transmit an alert indicating an error and/or conflict may exist with a security policies. Master server node 102 may also include a report component 22 operable to generate a report, such as a security policy report, with any errors that may be associated with a security policy.

In addition, security policy manager component 14 may also implement the created security policies for the resources on the system by sending instructions to the network of servers 108a-108n on the system with the created security polices for accessing the resources on the system.

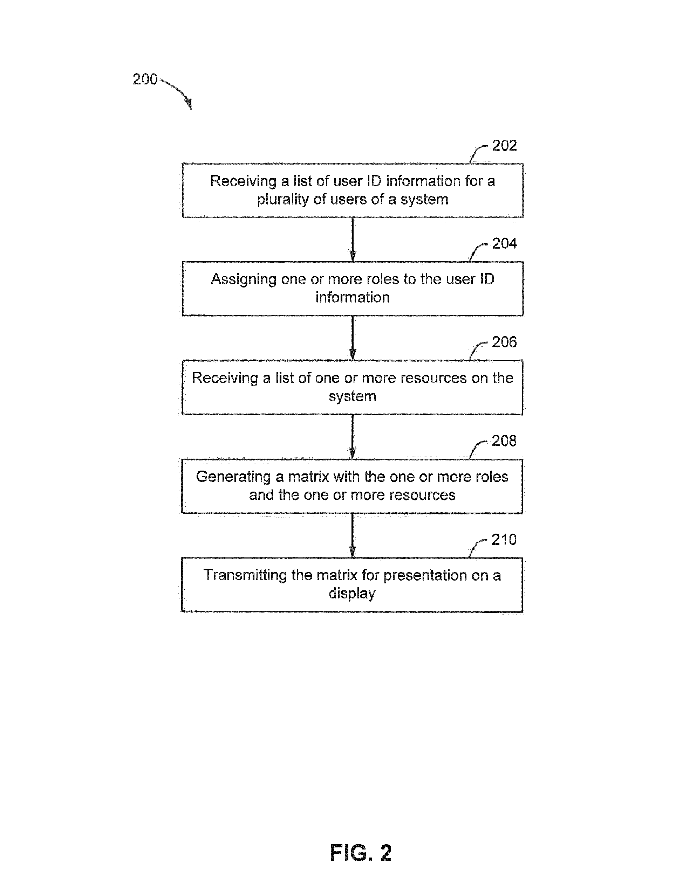

Referring now to Fig. 2, therein illustrated is an example method flow 200 for creating an access matrix in accordance with an aspect of the present invention. The method may include receiving a list of user identification (ID) information for a plurality of users of a system 202. The user ID information may indicate the users who may access the system. For example, resource manager component 10 (Fig. 1) may receive the lists of user ID information from various servers on the network.

In addition, the method may include assigning one or more roles to the user ID information 204. Roles may include a position, a responsibility, and a capacity, among other functions that a user may perform. For example, roles may include, but are not limited to, management, developers, quality assurance, sales, marketing, and human resources. In an aspect, resource manager component 10 may automatically assign one or more roles to the received user ID information. In another aspect, a user, such as an administrator may assign one or more roles to the user ID information. For example, client interface 106 (Fig. 1) may prompt a user to select the roles for the list of user ID information. It should be noted that one or more roles may correspond to the user ID information corresponding to a single user. Client interface 106 may communicate the assigned roles to the resource manager component 10.

The method may also include receiving a list of one or more resources 206. Resources may include files and/or directories of files that a user of the system may access. In an aspect, resource manager component 10 may receive a list of the resources on the system from the network of servers. In addition, the resources may be placed into groups based upon, for example, roles that may use the resources and/or other similarities between the resources. Groups of resources may include, but are not limited to, business documents, backup code, specification, presentation materials, account balances, and document templates, among other groups of resources.

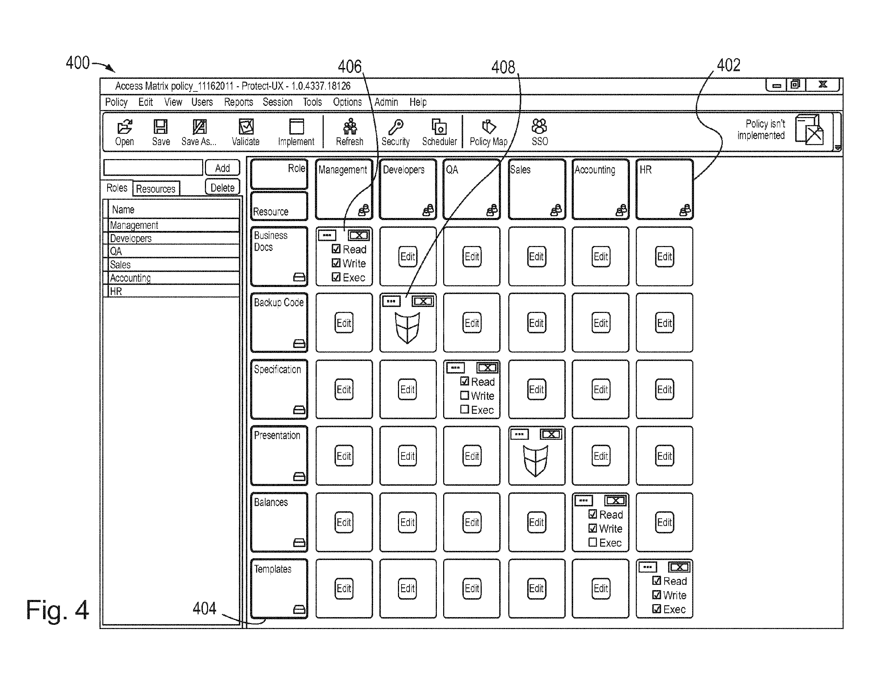

The method may further include generating a matrix with the one or more roles and the one or more resources 206. In an aspect, resource manger component 10 may receive the various resources capable of being accessed by the system and the one or more roles that have been assigned to users of the system, and generate a matrix which correlates the one or more roles with the resources. An example matrix is illustrated in Fig. 4.

The method may additionally include transmitting the matrix for presentation on a display 210. For example, resource manager component 10 may transmit the matrix for presentation on a display of client interface 106 where a user, such as an administrator of the system, may be able to view the matrix.

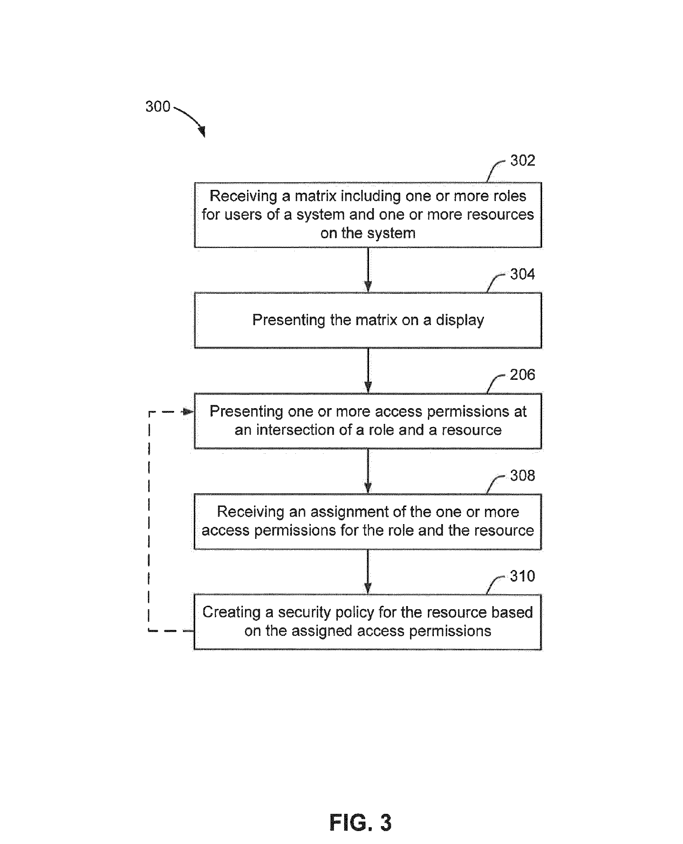

Referring now to Fig. 3, therein illustrated is an example method flow 300 for creating an access permission relationship for resources on the system in accordance with an aspect of the present invention. The method may include receiving a matrix including one or more roles for users of a system and one or more resources that are capable of being accessed by the system 302 and presenting the matrix on a display 304. For example, presentation component 26 (Fig. 1) may receive the matrix from master server node 102 (Fig. 1) and may present the matrix on a display of client interface 106 (Fig. 1).

The method may also include presenting one or more access permissions at an intersection of a role and a resource 306. Access permissions may determine what level of access (e.g., read, write, execute, etc.) each user may have to the resources. In an aspect, advanced settings may be applied to allow special permission classes, such as an ownership class which may override other permissions that have been set for a resource.

In addition, the method may include receiving an assignment of the one or more access permissions for the resource 308. In an aspect, access permission component 30 (Fig. 1) may receive user input assigning the access permissions for a particular resource and a particular role. For example, the user may assign read, write, and execution access to the resources in the business document group to all users that have been assigned a management role. Alternatively, the user may assign read, write, and execution access to the resources in the business document group to only a portion of the users that have been assigned a management role. In an aspect, access permissions may be automatically assigned to a particular resource and/or a particular role.

The method may further include creating a security policy for the resource based on the assigned access permissions 310 and assigning the security policy to the resource 312. The security policy may define the selected access permissions for the relationship between the various roles and resources. It should be noted that the access permissions may be applied to all individuals assigned a given role. In addition, it should be noted that the access permissions may be applied to the entire group of resources (e.g., all files and directories within the business document group). Thus, the matrix may allow flexibility in how security policies are created for various resource and roles within the system.

In an aspect, upon receiving the assignment of the access permission for a particular role and a particular resource, security policy component 24 (Fig. 1) may create a security policy for the particular resource and assign the security policy to the particular resource. In addition, communication component 28 may transmit the assigned security policy to, for example, master server node 102 to control the access to the particular resource based upon the security policy.

It should be noted that the method may continue to 308 and receive an assignment of access permissions for the same/different resource and a same/different role. Therefore, multiple security policies may be created for a single resource (e.g., different security policies for different users who may have access to the resource), and security policies may be created for one or more of the resources presented in the matrix.

Referring now to Fig. 4, therein illustrated is an example matrix interface 400 in accordance with an aspect of the present invention. Matrix interface 400 may have one or more roles 402 presented across the top portion of the matrix and one or more resources 404 presented along the side of the matrix. In addition, matrix interface 400 may have one or more access permissions 406 (e.g., read, write, execute, etc.) at an intersection of a role 402 and a resource 404. Thus, matrix interface 400 may present a visual access matrix that may allow a user of a system (e.g., an administrator) to create access permission relationships between the various roles 402 and resources 404.

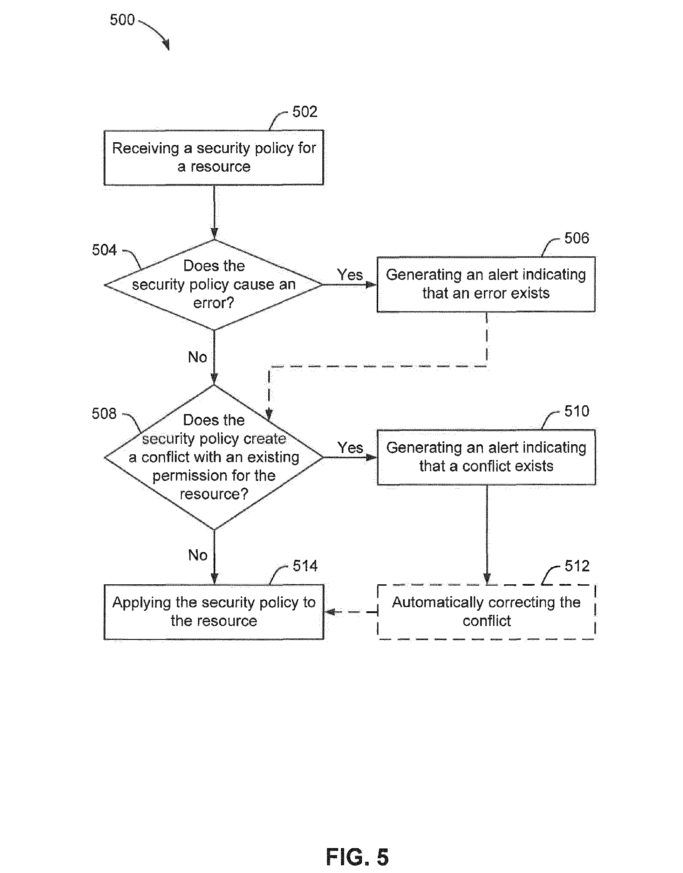

Referring now to Fig. 5, therein illustrated is an example method flow 500 for forecasting effective access to resources in accordance with an aspect of the present invention. The method may include receiving a security policy for a resource 502. For example, security policy manager component 14 (Fig. 1) may receive a security policy created for a resource on the system that defines the access permission(s) to the resources for a set or subset of user ID information.

The method may include determining whether the security policy causes an error 504. An error may include, but is not limited to: (a) the target resource (e.g., the resource that security policy applies to) not existing on the server and/or a hard drive; (b) the target resource not having an access permission applied to the resource; and (c) the target resource having insufficient permissions (e.g., non-effective permissions applied to the target resource). In an aspect, evaluation component 16 (Fig. 1) may determine whether the security policy causes an error.

If the security policy causes an error, the method may include generating an alert indicating that an error exists 506. For example, an alert component 20 (Fig. 1) may generate a security policy validation report illustrating the security policy and indicating that an error is associated with the security policy.

The method may also include determining whether the security policy creates a conflict with an existing permission for the resource 508. A conflict may include, but is not limited to, applying different access permissions to user ID information for the same resource. For example, if a user ID is placed in multiple roles where one role grants access to the resource while the other role is denied access to the resource, evaluation component 16 may determine that a conflict exits for the security policy.

If the security policy creates a conflict, the method may include generating an alert indicating that a conflict exists 510. For example, alert component 20 may change the color and/or font of the matrix that is presented, or may sound an audible or other alarm. Thus, when an assignment of a security policy is made for a set of resources, and if a conflict exists for the security policy, the cells in the matrix where the conflict is applicable, may change color (e.g., to red) to indicate the conflict. Another example may include generating an icon (e.g., a red dot, or an exclamation point) on or in proximity to the resource with the conflict. By generating an alert when a conflict exists, a user of the client device may be notified in real time or near real time that conflicts may arise upon implementation of a security policy.

Thus, when a security policy is created, the security policy may be verified before implementing the security policy on the various resources. The client interface and server may interact to verify that the created security policy will not conflict with an existing permission on the servers. In addition, the client interface and server may interface to ensure that the physical files and/or directories exist on the server. Therefore, the system may resolve the conflicts and/or errors for the security policies before the security policy is applied to live files and/or directories across the platforms.

The method may optionally include automatically correcting the conflict 512. In an aspect, security policy manager component 14 may apply a conflict resolution to the security policy to correct the conflict.

In addition, the method may also include applying the security policy to the resource 514. For example, security manager component 14 may apply the security policy to the resources on the system by sending instructions to the network of servers with access permissions to access the resources.

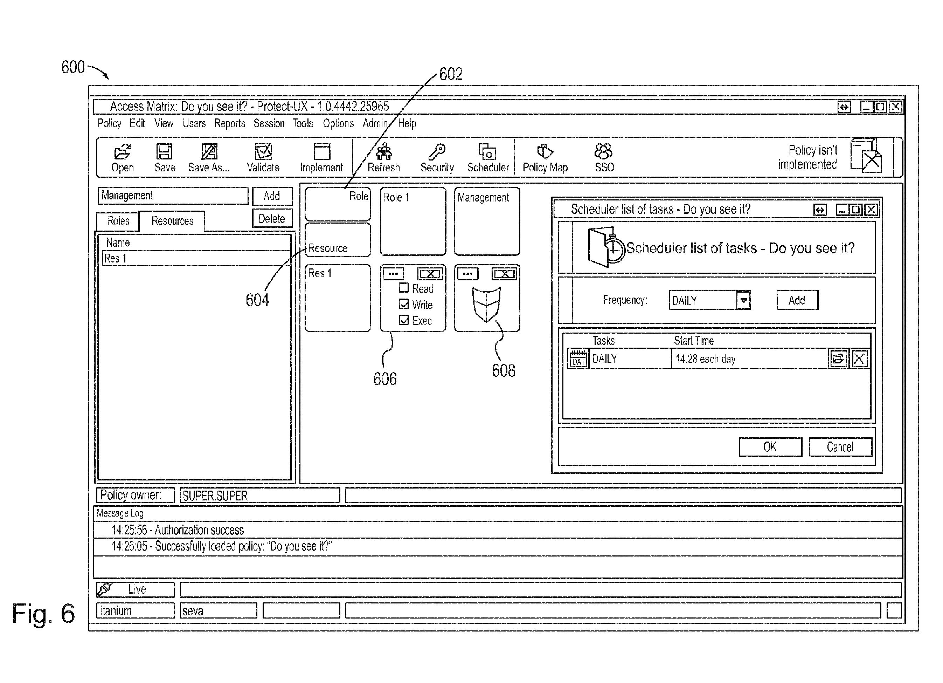

Referring now to Figs. 6-10, illustrated therein are example graphical interface (GUI) screens for use with aspects of the present invention. For example, Fig. 6 illustrates an example GUI screen 600 for creating "Role-Based" access permissions for various roles 602 and resources 604 on the system. In an aspect, the resources 604 may be a selection of files and directories from a plurality of mixed, cross platform systems running on a network of servers on the system. In addition, the roles 602 may be based on a collection of user ID information from a plurality of mixed, cross platform systems running on a network or servers on the system. In an aspect, GUI screen 600 may allow a user of the system, such as an administrator to create an access permission relationship at an intersection of the various roles and resources using a visual access matrix presented on GUI screen 600. For example, the user may select whether a role 602 may have one or more access permissions 606 (e.g., read, write, execute) for a particular resource 604. In an aspect, the user may select a check box next to the access permission 606 in order to allow the role 602 to have particular access permissions 606 for the resource 606. Other forms of input may be used to select an access permission, including, but not limited to, a drop down menu, text entry, and voice commands.

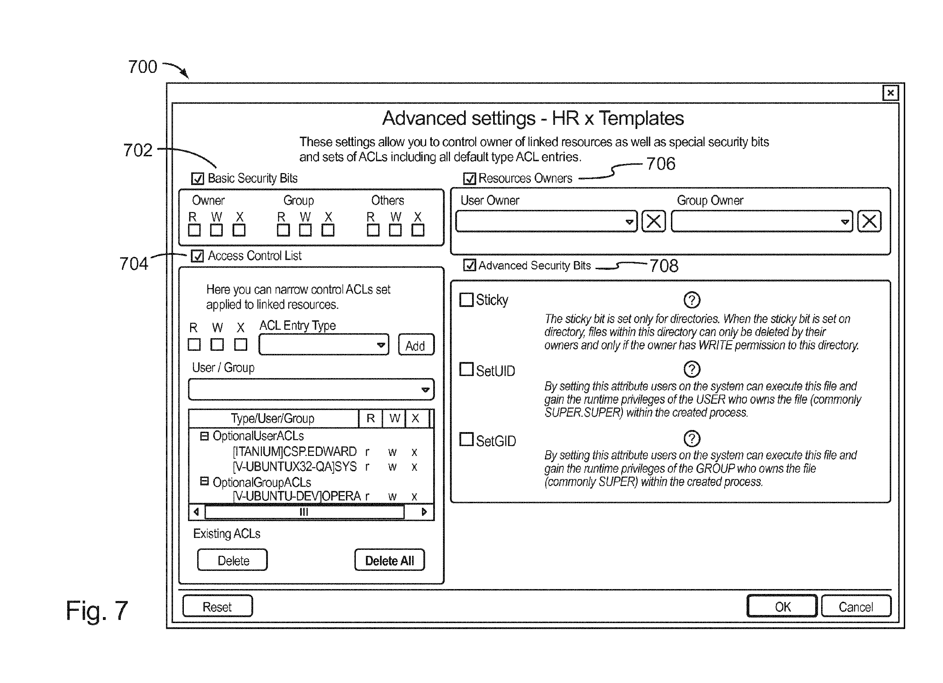

Referring now to Fig. 7, illustrated therein is an example GUI screen 700 illustrating an advanced settings screen which allows a user to select special permissions for resources and/or roles. In an aspect, to access the advanced setting screen a user may select a "shield" icon 608 on GUI 600 (Fig. 6), which may indicate that advanced settings are available for a particular intersection of a resource and a role. Advanced settings may include, but are not limited to, special permission classes (e.g., ownership) 706, basic security bits 702, advanced security bits (e.g., Sticky, SetUID, and SetGID) 708, and access control lists 704. For example, advanced settings may allow a user to control an owner of linked resources as well as special security bits of linked resources. In addition, advanced settings may allow a user to control ACLs applied to linked resources, including changing default ACL entries applied to resources. The advanced setting screen 700 may also allow a user to override other permissions that have been set in the system.

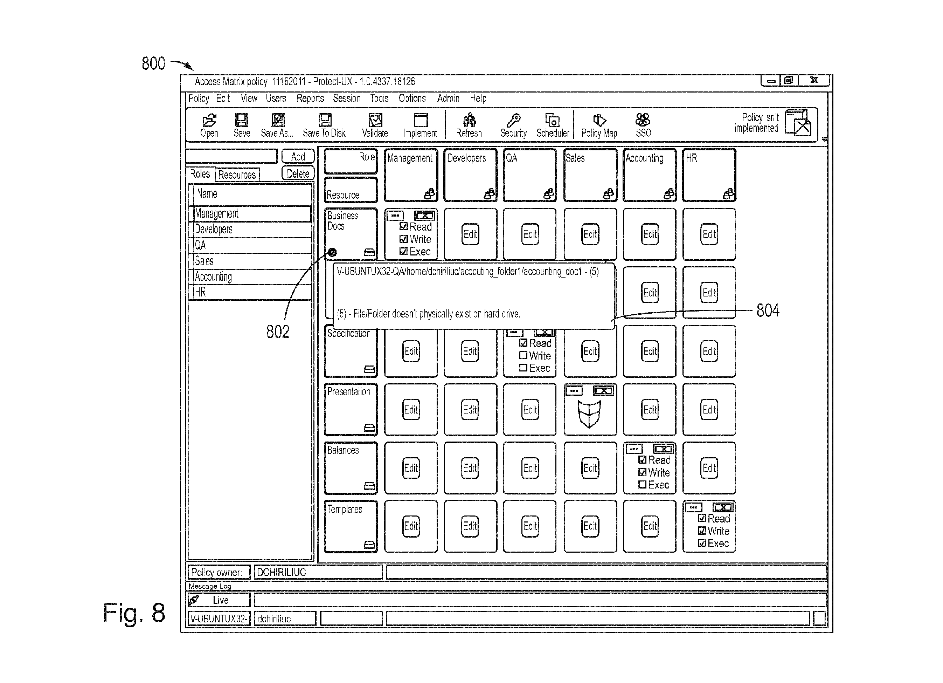

Referring now to Fig. 8, illustrated therein is an example GUI screen 800 illustrating a conflict among security polices set for a particular resource in accordance with an aspect of the present invention. For example, a conflict may include placing a user in multiple roles, where one role grants the user access to a resource while another role denies the user access to the resource. In addition, a conflict may include trying to place a security policy on a resource that does not exist. In an aspect, a red dot 802 may be presented immediately upon an occurrence of a conflict notifying a user that a conflict may exist. By placing a cursor over the red dot 802, or other form of selection, a text box 804 may be presented to the user with details of the conflict. As such, screen 800 may present security information in near real-time allowing a user of the system to view security information for resources and roles across multiple platforms and be notified in near real-time upon an occurrence of a conflict among security policies.

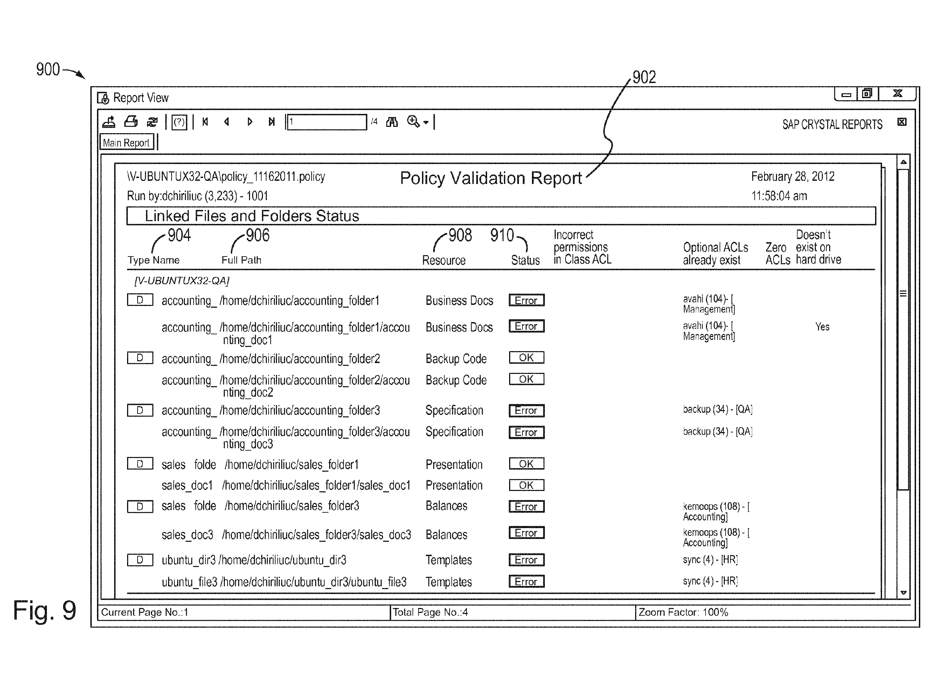

Referring now to Fig. 9, illustrated therein is an example GUI screen 900 with a policy validation report 900 in accordance with an aspect of the present invention. Policy validation report 900 may allow a user to verify security policies before implementing the policies on live files. For example, policy validation report 900 may include information indicating different reasons why conflicts may arise upon implementation of a security policy.

In an aspect, policy validation report 902 may include a type name 904, where the type may indicate whether the error is for a directory (e.g., "D") or a file (e.g., "F") and the name may provide the file or directory name. In addition, policy validation report 902 may include a full path 906 to the file listed on the report, including a node name. Policy validation report 902 may also indicate the resources 908 on the system where the file or directory belongs. Policy validation report 902 may also indicate for each file or directory listed the status 910 of the file or directory (e.g., "ok" or "error"). Errors may include, but are not limited to, a file or directory appearing in multiple profiles with different permissions, insufficient permission (e.g., a file has specific settings in an ACL that may not work as a user might think), optional ACLs already exists (e.g., a file already has ACLs that may be overwritten with new ACLs), zero ACLs (e.g., a file is not allowed to have ACLs applied to the file), and a file does not exist on a hard drive. Thus, a user of the system may use policy validation report 902 to verify that a security policy will not create conflicts with existing permissions on the servers before implementing the security policies.

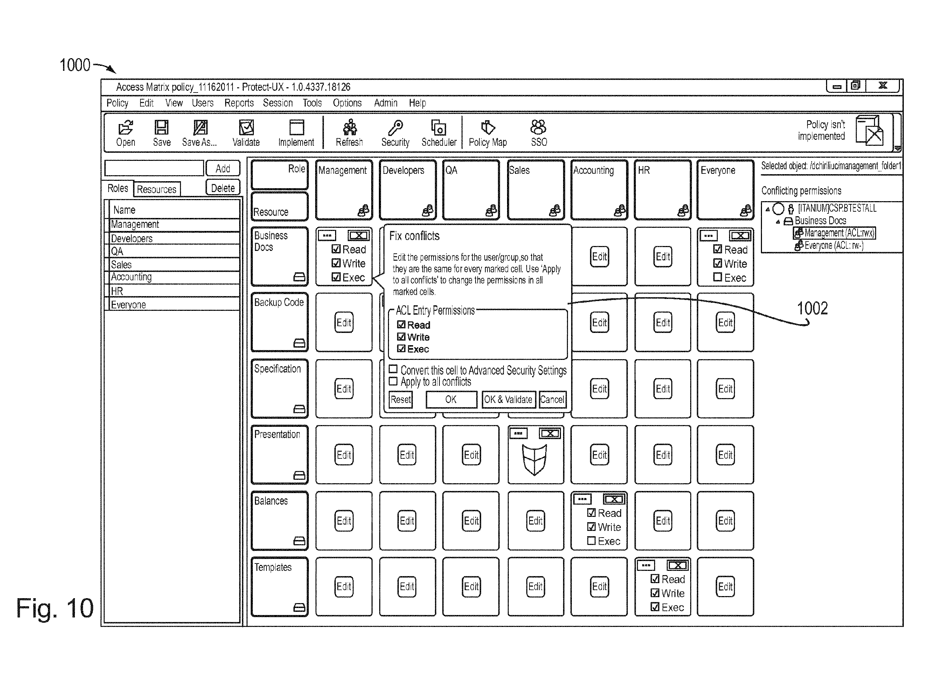

Referring now to Fig. 10, illustrated therein is an example GUI screen 1000 that aids a user in resolving potential conflicts that may result when a security policy is implemented in accordance with an aspect of the present invention. In an aspect, a dialog 1002 may be presented to a user that provides step-by-step instructions for resolving and removing potential conflicts. For example, dialog 1002 may provide suggestions for resolving potential conflicts. Suggestions may include, but are not limited to, creating a new role and adding an advanced permission. In addition, dialog 1002 may allow a user to select for the conflict to be automatically fixed. By automatically fixing the conflict, a simplest form of conflict resolution may be applied to the security policy. Therefore, screen 1000 may allow a user to fix potential conflicts prior to a security policy being implemented in a system and allow the user to resolve any issues before the security policy is applied to live files and directories across the platforms.

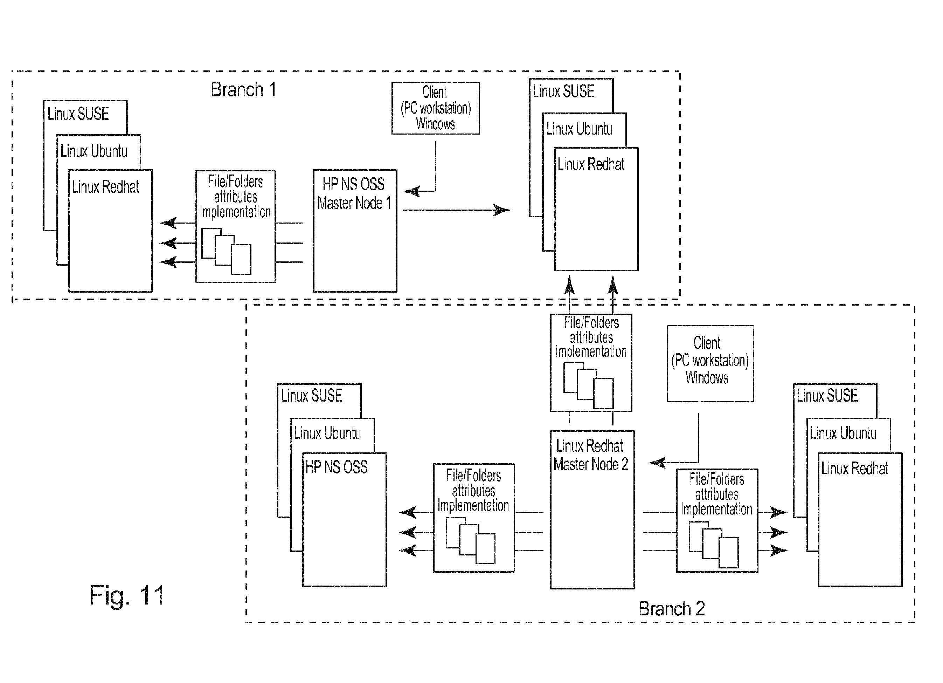

Referring now to Fig. 11, illustrated therein is an example system 1100 in accordance with an aspect of the present invention. System 1100 illustrates two client workstations gathering information from the various servers operating on the system and implementing access rules.

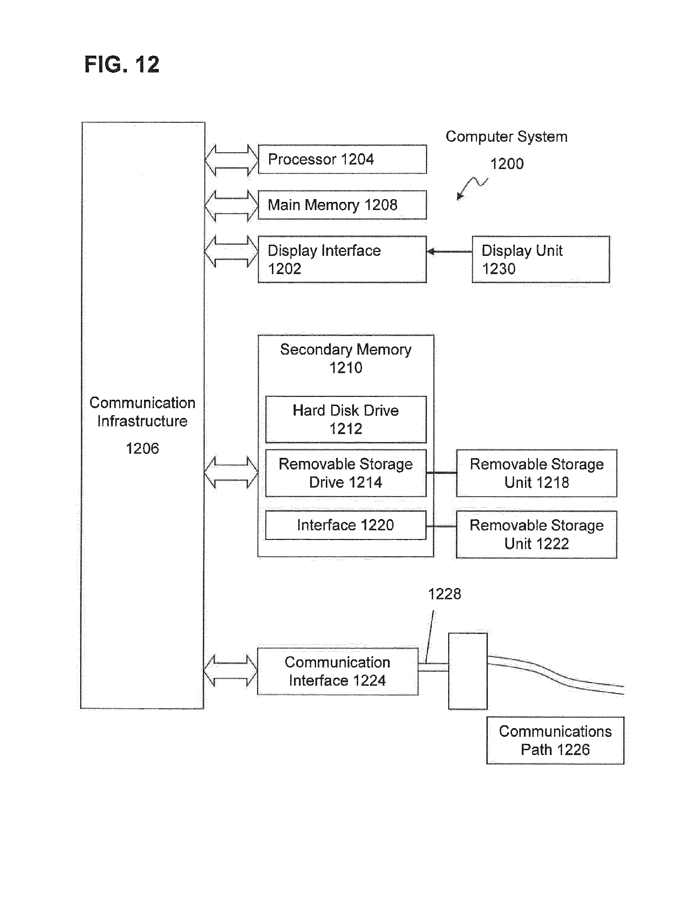

Aspects of the present invention may be implemented using hardware, software, or a combination thereof and may be implemented in one or more computer systems or other processing systems. In an aspect of the present invention, features are directed toward one or more computer systems capable of carrying out the functionality described herein. An example of such a computer system 1200 is illustrated in Fig. 12.

Computer system 1200 includes one or more processors, such as processor 1204. The processor 1204 is connected to a communication infrastructure 1206 (e.g., a communications bus, cross-over bar, or network). Various software aspects are described in terms of this exemplary computer system. After reading this description, it will become apparent to a person skilled in the relevant art(s) how to implement aspects of the invention using other computer systems and/or architectures.

Computer system 1200 can include a display interface 1202 that forwards graphics, text, and other data from the communication infrastructure 1206 (or from a frame buffer not shown) for display on a display unit 1230. Computer system 1200 also includes a main memory 1208, preferably random access memory (RAM), and may also include a secondary memory 1210. The secondary memory 1210 may include, for example, a hard disk drive 1212 and/or a removable storage drive 1214, representing a floppy disk drive, a magnetic tape drive, an optical disk drive, a universal serial bus (USB) flash drive, etc. The removable storage drive 1214 reads from and/or writes to a removable storage unit 1218 in a well-known manner. Removable storage unit 1218 represents a floppy disk, magnetic tape, optical disk, USB flash drive etc., which is read by and written to removable storage drive 1214. As will be appreciated, the removable storage unit 1218 includes a computer usable storage medium having stored therein computer software and/or data.

Alternative aspects of the present invention may include secondary memory 1210 and may include other similar devices for allowing computer programs or other instructions to be loaded into computer system 1200. Such devices may include, for example, a removable storage unit 1222 and an interface 1220. Examples of such may include a program cartridge and cartridge interface (such as that found in video game devices), a removable memory chip (such as an erasable programmable read only memory (EPROM), or programmable read only memory (PROM)) and associated socket, and other removable storage units 1222 and interfaces 1220, which allow software and data to be transferred from the removable storage unit 1222 to computer system 1200.

Computer system 1200 may also include a communications interface 1224. Communications interface 1224 allows software and data to be transferred between computer system 1200 and external devices. Examples of communications interface 1224 may include a modem, a network interface (such as an Ethernet card), a communications port, a Personal Computer Memory Card International Association (PCMCIA) slot and card, etc. Software and data transferred via communications interface 1224 are in the form of signals 1228, which may be electronic, electromagnetic, optical or other signals capable of being received by communications interface 1224. These signals 1228 are provided to communications interface 1224 via a communications path (e.g., channel) 1226. This path 1226 carries signals 1228 and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage drive 1214, a hard disk installed in hard disk drive 1212, and signals 1228. These computer program products provide software to the computer system 1200. Aspects of the invention are directed to such computer program products.

Computer programs (also referred to as computer control logic) are stored in main memory 1208 and/or secondary memory 1210. Computer programs may also be received via communications interface 1224. Such computer programs, when executed, enable the computer system 1200 to perform the features in accordance with aspects of the present invention, as discussed herein. In particular, the computer programs, when executed, enable the processor 1204 to perform the features in accordance with aspects of the present invention. Accordingly, such computer programs represent controllers of the computer system 1200.

In an aspect of the present invention that is implemented using software, the software may be stored in a computer program product and loaded into computer system 1200 using removable storage drive 1214, hard drive 1212, or communications interface 1220. The control logic (software), when executed by the processor 1204, causes the processor 1204 to perform the functions described herein. In another aspect of the present invention, the system is implemented primarily in hardware using, for example, hardware components, such as application specific integrated circuits (ASICs). Implementation of the hardware state machine so as to perform the functions described herein will be apparent to persons skilled in the relevant art(s).

In yet another aspect of the present invention, features thereof is implemented using a combination of both hardware and software.

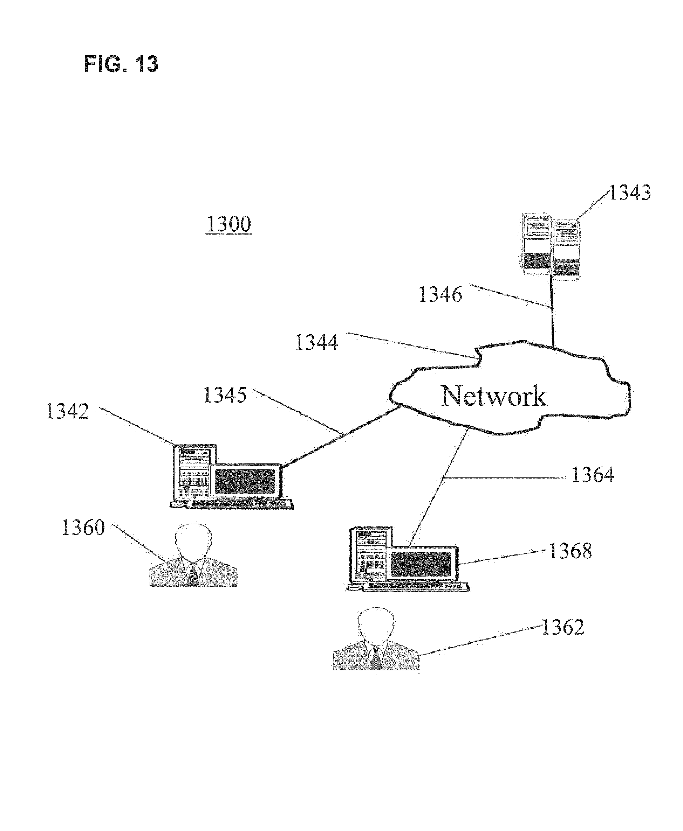

Fig. 13 shows a communication system 1300 usable in accordance with aspects of the present invention. The communication system 1300 includes one or more accessors 1360, 1362 (also referred to interchangeably herein as one or more "users") and one or more terminals 1342, 1368. In one aspect of the present invention, data for use is, for example, input and/or accessed by accessors 1360, 1364 via terminals 1342, 1368, such as personal computers (PCs), minicomputers, mainframe computers, microcomputers, telephonic devices, or wireless devices, such as personal digital assistants ("PDAs") or a hand-held wireless devices coupled to a server 1343, such as a PC, minicomputer, mainframe computer, microcomputer, or other device having a processor and a repository for data and/or connection to a repository for data, via, for example, a network 1344, such as the Internet or an intranet, and couplings 1345, 1346, 1364. The couplings 1345, 1346, 1364 include, for example, wired, wireless, or fiberoptic links.

While aspects of the present invention have been described in connection with examples thereof, it will be understood by those skilled in the art that variations and modifications of the aspects of the present invention described above may be made without departing from the scope hereof. Other aspects will be apparent to those skilled in the art from a consideration of the specification or from a practice in accordance with aspects of the invention disclosed herein.

## Claims

1. A method for creating an access permission relationship for resources, the method comprising:
receiving a matrix comprising one or more roles for users of a system and one or more resources on the system;
presenting the matrix on a display;
presenting access permissions at an intersection of a role and a resource on the matrix;
receiving an assignment of one or more access permissions for the role and the resources; and
creating a security policy for the resource based on the assigned access permissions.

2. The method of claim 1, further comprising:
receiving an assignment of an advanced setting to the one or more access permissions for the role and the resources.

3. A system for creating an access permission relationship for resources, the system comprising:
a presentation component operable to receive a matrix comprising one or more roles for users of a system and one or more resources on the system, present the matrix on a display, and present access permissions at an intersection of a role and a resource on the matrix;
an access permission component operable to receive an assignment of one or more access permissions for the role and the resources; and
a security policy component operable to create a security policy for the resource based on the assigned access permissions.

4. The method of claim 1 or the system of claim 5, wherein the one or more roles and/or the one or more resources are received from a plurality of cross-platform operating systems running on a network of servers.

5. The system of claim 3, wherein the access permission component is further operable to receive an assignment of an advanced setting to the one or more access permissions for the role and the resources.

6. A system for creating an access permission relationship for resources, the system comprising:
a module for receiving a matrix comprising one or more roles for users of a system and one or more resources on the system;
a module for presenting the matrix on a display;
a module for presenting access permissions at an intersection of a role and a resource on the matrix;
a module for receiving an assignment of one or more access permissions for the role and the resources; and
a module for creating a security policy for the resource based on the assigned access permissions.

7. A computer program product, comprising:
a computer-readable medium comprising:
at least one instruction for causing a computer to receive a matrix comprising one or more roles for users of a system and one or more resources on the system;
at least one instruction for causing the computer to present the matrix on a display;
at least one instruction for causing the computer to present access permissions at an intersection of a role and a resource on the matrix;
at least one instruction for causing the computer to receive an assignment of one or more access permissions for the role and the resources; and
at least one instruction for causing the computer to create a security policy for the resource based on the assigned access permissions.

8. A method for forecasting effective access to resources, the method comprising:
receiving a security policy for a resource;
determining whether conflicts may arise upon implementation of a security policy; and
generating and transmitting an alert indicating a conflict exists when conflicts may arise upon implementation of a security policy.

9. The method of claim 8, further comprising:
determining whether the security policy creates an error; and
generating and transmitting an alert indicating the error exists when the security policy creates the error.

10. The method of claim 8, further comprising:
correcting the conflict; and
applying the security policy to the resource.

11. A system for forecasting effective access to resources, the system comprising:
a security policy manager component operable to receive a security policy for a resource;
an evaluation component operable to determine whether conflicts may arise upon implementation of a security policy; and
an alert component operable to generate and transmit an alert indicating a conflict exists when conflicts may arise upon implementation of a security policy.

12. The system of claim 11, wherein the evaluation component is further operable to determine whether the security policy creates an error; and
the alert component is further operable to generate and transmit an alert indicating the error exists when the security policy creates the error.

13. The method of claim 9 or the system of claim 12, wherein the error comprises one or more of the resource not existing on a server, the resource does not have access permissions applied to the resource, and the resource having insufficient permissions.

14. The method of claim 9 or system of claim 12, wherein the alert comprises any one or more of:
a security policy validation report,
changing a color of a font, and
sounding an audible alarm.

15. The system of claim 11, wherein the security policy manager component is further operable to correct the conflict and apply the security policy to the resource.
